# EUROPEAN PATENT APPLICATION

(11) **EP 4 842 043 A1**
(43) Date of publication of application: **18.11.2026**
(21) Application number: 24919699.9
(22) Date of filing: 19.08.2024
(51) Int. Cl.: H04W 24/08, H04W 24/10

(54) **ENERGY CONSUMPTION MEASUREMENT METHOD AND APPARATUS, AND STORAGE MEDIUM**

(30) Priority: 24.01.2024 CN 202410104670
(71) Applicant: ZTE Corporation, Shenzhen, Guangdong 518057 (CN)
(72) Inventor: TAN, Jie, Shenzhen, Guangdong 518057 (CN); GAO, Yuan, Shenzhen, Guangdong 518057 (CN); QIU, Zhihong, Shenzhen, Guangdong 518057 (CN); SHA, Xiubin, Shenzhen, Guangdong 518057 (CN)
(74) Representative: Ziebig Hengelhaupt Intellectual Property Attorneys Patentanwaltskanzlei PartGmbB
(86) International application number: PCT/CN2024/113019
(87) International publication number: WO 2025/156617

(57) **Abstract**

Provided are an energy consumption measurement method and apparatus, and a storage medium. The energy consumption measurement method comprises: acquiring network energy consumption measurement configuration information; generating a network energy consumption measurement report on the basis of the network energy consumption measurement configuration information; and sending the network energy consumption measurement report.

## Description

The present disclosure claims priority to Chinese Patent Application No. 202410104670.1, filed on January 24, 2024, the entire contents of which are incorporated herein by reference.

### TECHNICAL FIELD

The present disclosure relates to the field of communication technologies, and in particular, to an energy consumption measurement method and apparatus, and a storage medium.

### BACKGROUND

Currently, according to a regulation of an operator, a user may obtain information related to network energy consumption from a network, so as to facilitate the user to better control a network usage behavior of the user itself, thereby saving energy.

However, currently, a research direction related to the network focus more on how to satisfy user experience while improving network energy efficiency, mainly concentrating on an interior of the network, resulting in inability for the user to obtain the information related to the network energy consumption from the network. In response to the regulation of the operator, it is necessary to provide the user with information related to the network energy consumption.

### SUMMARY

In a first aspect, embodiments of the present disclosure provide an energy consumption measurement method, applied to a base station. The method includes:
obtaining network energy consumption measurement configuration information; generating a network energy consumption measurement report based on the network energy consumption measurement configuration information; and sending the network energy consumption measurement report.

In a second aspect, the embodiments of the present disclosure provide another energy consumption measurement method, applied to a target functional entity. The method includes:
sending network energy consumption measurement configuration information; and receiving a network energy consumption measurement report, where the network energy consumption measurement report is generated, by a base station, based on the network energy consumption measurement configuration information.

In a third aspect, the embodiments of the present disclosure provide an energy consumption measurement apparatus. The apparatus includes: a communication module and a processing module; where
the communication module is configured to obtain network energy consumption measurement configuration information;
the processing module is configured to generate a network energy consumption measurement report based on the network energy consumption measurement configuration information; and
the communication module is further configured to send the network energy consumption measurement report.

In a fourth aspect, the embodiments of the present disclosure provide another energy consumption measurement apparatus. The apparatus includes: a sending module and a receiving module; where
the sending module is configured to send network energy consumption measurement configuration information; and
the receiving module is configured to receive a network energy consumption measurement report, where the network energy consumption measurement report is generated, by a base station, based on the network energy consumption measurement configuration information.

In a fifth aspect, the embodiments of the present disclosure provide yet another energy consumption measurement apparatus. The apparatus includes a processor, where a computer program, upon being executed, enable the processor to implement the energy consumption measurement method according to the first aspect, or to implement the energy consumption measurement method according to the second aspect.

In a sixth aspect, the embodiments of the present disclosure provide a computer-readable storage medium. The computer-readable storage medium includes computer instructions; and the computer instructions, upon being executed, implement the energy consumption measurement method according to the first aspect, or implement the energy consumption measurement method according to the second aspect.

In a seventh aspect, the embodiments of the present disclosure provide a computer program product containing instructions. The computer program product, upon being run on a computer, enable the computer to implement the energy consumption measurement method according to the first aspect, or to implement the energy consumption measurement method according to the second aspect.

### BRIEF DESCRIPTION OF THE DRAWINGS

In order to describe the technical solutions in the present disclosure more clearly, the following briefly introduces the drawings required for describing some embodiments of the present disclosure. However, the drawings described below are merely drawings of some embodiments of the present disclosure, and those of ordinary skill in the art may further derive other drawings from these drawings.
FIG. 1 is a schematic diagram of an architecture of a communication system according to some embodiments.
FIG. 2 is a schematic flowchart of an energy consumption measurement method according to some embodiments.
FIG. 3 is a schematic interaction diagram of network energy consumption measurement configuration information according to some embodiments.
FIG. 4 is a schematic interaction diagram of another network energy consumption measurement configuration information according to some embodiments.
FIG. 5 is a schematic interaction diagram of a network energy consumption measurement report according to some embodiments.
FIG. 6 is a schematic interaction diagram of another network energy consumption measurement report according to some embodiments.
FIG. 7 is a schematic interaction diagram of yet another network energy consumption measurement configuration information according to some embodiments.
FIG. 8 is a schematic interaction diagram of yet another network energy consumption measurement configuration information according to some embodiments.
FIG. 9 is a schematic interaction diagram of yet another network energy consumption measurement configuration information according to some embodiments.
FIG. 10 is a schematic interaction diagram of yet another network energy consumption measurement configuration information according to some embodiments.
FIG. 11 is a schematic interaction diagram of yet another network energy consumption measurement configuration information according to some embodiments.
FIG. 12 is a schematic interaction diagram of yet another network energy consumption measurement configuration information according to some embodiments.
FIG. 13 is a schematic flowchart of another energy consumption measurement method according to some embodiments.
FIG. 14 is a schematic diagram of a structure of an energy consumption measurement apparatus according to some embodiments.
FIG. 15 is a schematic diagram of a structure of another energy consumption measurement apparatus according to some embodiments.
FIG. 16 is a schematic diagram of a structure of yet another energy consumption measurement apparatus according to some embodiments.

### DETAILED DESCRIPTION

The technical solutions in the embodiments of the present disclosure will be described clearly and completely below with reference to the accompanying drawings in the embodiments of the present disclosure. However, the described embodiments are merely some of the embodiments of the present disclosure, rather than all the embodiments. Based on the embodiments in the present disclosure, all other embodiments obtained by those of ordinary skill in the art without making creative efforts shall belong to the protection scope of the present disclosure.

In the description of the present disclosure, unless otherwise specified, "/" means "or", for example, A/B may represent A or B. The term "and/or" herein is merely an association relationship describing associated objects, indicating that three relationships may exist, for example, A and/or B may represent: only A, only B, and both A and B. In addition, "at least one" means one or more, and "multiple/plurality of" means two or more. Expressions such as "first", "second", etc. do not limit the number or execution order, and "first", "second", etc. also do not limit the defined objects must be different from each other.

It should be noted that in the present disclosure, expressions such as "exemplarily" or "for example" are used to indicate examples, illustrations, or explanations. Any embodiment or design solution described in the present disclosure as "exemplarily" or "for example" should not be construed as being more preferred or advantageous than other embodiments or design solutions. To be specific, the usage of expressions such as "exemplarily" or "for example" is intended to present related concepts in a detailed manner.

As described in some technologies, in response to a regulation of an operator, it is necessary to provide a user with information related to network energy consumption. However, currently, there is no relevant technical solution for how to perform energy consumption measurement on a network to obtain information related to the network energy consumption.

Based on this, the present disclosure provides an energy consumption measurement method. A base station can implement energy consumption measurement on a network based on network energy consumption measurement configuration information, and generate a network energy consumption measurement report based on an energy consumption measurement result, facilitating monitoring and management of network energy consumption, thereby achieving an effect of energy saving.

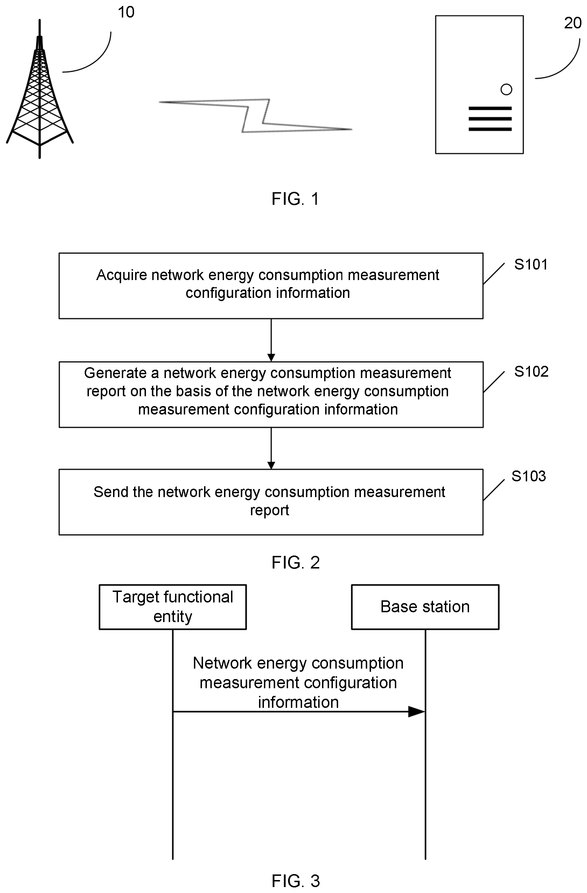

The energy consumption measurement method provided by the present disclosure may be applied to a communication system as shown in FIG. 1. FIG. 1 shows a schematic diagram of an architecture of a communication system provided by the embodiments of the present disclosure. As shown in FIG. 1, the communication system includes a base station 10 and a target functional entity 20.

In some embodiments, the base station 10 may be a base station in long term evolution (LTE), long term evolution advanced (LTE-A), an evolutional Node B (eNB or eNodeB), a base station device in a fifth generation (5G) network, or a base station in a future communication system, etc. The base station may include various macro base stations, micro base stations, home base stations, wireless remote radio units, reconfigurable intelligent surfaces (RIS), routers, wireless fidelity (WiFi) devices, and other network-side devices.

In some embodiments, the target functional entity 20 includes but is not limited to any of: an energy saving entity, an energy consumption measurement entity, an operation administration and maintenance (OAM) network element, or an authentication management function (AMF) network element.

In some embodiments, the base station 10 receives network energy consumption measurement configuration information sent from the target functional entity 20, performs energy consumption detection on the network, and generates a network energy consumption measurement report.

It should be noted that FIG. 1 is only an exemplary diagram of a framework. The number of devices included in FIG. 1 and the names of the devices are not limited, and in addition to the devices shown in FIG. 1, the communication system may further include other devices (e.g., a core network device).

The application scenarios of the embodiments of the present disclosure are not limited. The system architecture and business scenarios described in the embodiments of the present disclosure are intended to illustrate the technical solutions of the embodiments of the present disclosure more clearly, and do not constitute a limitation on the technical solutions provided by the embodiments of the present disclosure. Those of ordinary skill in the art will appreciate that, with the evolution of network architecture and the emergence of new business scenarios, the technical solutions provided by the embodiments of the present disclosure are equally applicable to similar technical problems.

FIG. 2 shows a schematic flowchart of an energy consumption measurement method provided by the present disclosure. As shown in FIG. 2, the energy consumption measurement method is applied to a base station, and the method at least includes S101 to S103.

In S101: network energy consumption measurement configuration information is obtained.

In some embodiments, as shown in FIG. 3, a base station receives network energy consumption measurement configuration information sent from a target functional entity.

Exemplarily, in a case where a target functional entity needs to obtain a network energy consumption measurement report, so as to obtain network energy consumptionrelated information, the target functional entity generates network energy consumption measurement configuration information and directly sends the network energy consumption measurement configuration information to a base station. In this way, the target functional entity can directly control and manage a relevant configuration for the base station to perform energy consumption measurement, a configuration implementation speed is relatively fast, so that the base station can respond to an energy consumption measurement demand in a more timely manner.

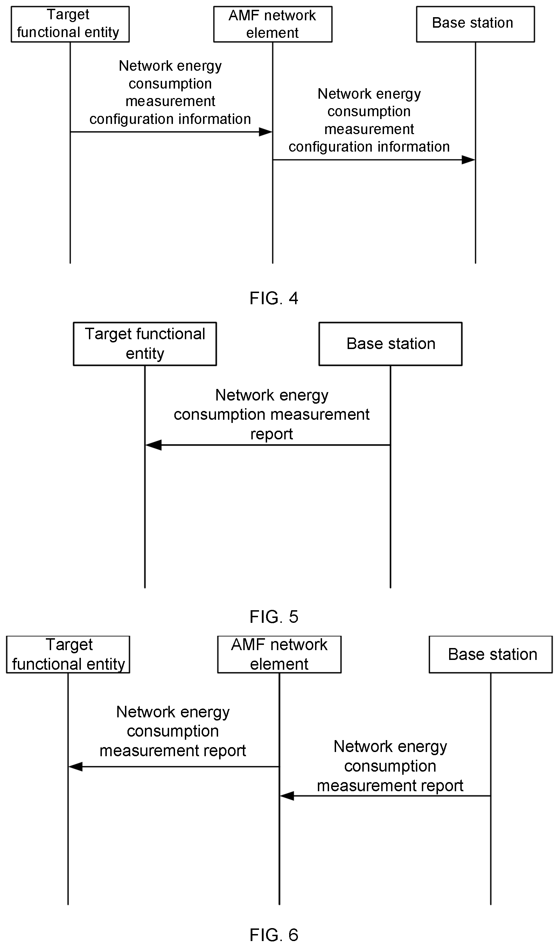

In other embodiments, as shown in FIG. 4, a base station receives network energy consumption measurement configuration information sent from a target functional entity via an AMF network element.

Exemplarily, in a case where a target functional entity needs to obtain a network energy consumption measurement report, so as to obtain network energy consumptionrelated information, the target functional entity generates network energy consumption measurement configuration information, first sends the network energy consumption measurement configuration information to an AMF network element, and then the AMF network element sends the network energy consumption measurement configuration information to a base station. In this way, a unified configuration management of energy consumption measurement for the base station via the AMF network element can be achieved, thereby improving a uniformity and coordination of management.

In some embodiments, a configuration manner of the network energy consumption measurement configuration information is determined according to a measurement object indicated by a higher-layer entity.

Exemplarily, in a case where a measurement granularity of the measurement object indicated by the higher-layer entity is a certain terminal (e.g., User Equipment, (UE), a certain network slice, a certain service type, a certain protocol data unit (PDU) session, or a certain quality of service (QoS) data flow, the higher-layer entity configures the network energy consumption measurement configuration information for the base station via the target functional entity.

As another example, in a case where the measurement object specified by the higher-layer entity is some terminals in a specific area, some services, some slices, etc., used to represent overall user service energy consumption of a cell, without targeting a specific user, the target functional entity directly configures the network energy consumption measurement configuration information for the base station. Herein, the target functional entity includes any of: an energy saving entity, an energy consumption measurement entity, an operation administration and maintenance (OAM) network element, or an authentication management function (AMF) network element.

The network energy consumption measurement configuration information includes at least one of: network energy consumption measurement reference information, a service type, an area range, an identifier of a network slice, an identifier of a PDU session, an identifier of a QoS data flow, a network identifier of a standalone non-public network (SNPN), an identifier of a public land mobile network, an identifier of a core network area, a priority of energy consumption measurement, an energy consumption threshold for energy consumption measurement, an address of a target functional entity, a measurement interval for energy consumption measurement, a measurement type for energy consumption measurement, a sending period of a network energy consumption measurement report, a sending trigger indication of a network energy consumption measurement report, a real-time sending indication of a network energy consumption measurement report, a periodic sending indication of a network energy consumption measurement report, a start indication for energy consumption measurement, measurement time for energy consumption measurement, or a pause indication for energy consumption measurement.

In some embodiments, the network energy consumption measurement reference information is a unique identifier for identifying the network energy consumption measurement configuration information, and consists of multiple pieces of identification information. Herein, the network energy consumption measurement reference information includes at least one of: a mobile country code (MCC), a mobile network code (MNC), a tracking area code (TAC), a public land mobile network identifier (PLMN ID), an identifier of the base station (Next Generation Node Identifier, gNB ID), a location area code (LAC), or an identifier (ID) of the network energy consumption measurement reference information. Where the identifier (ID) of the network energy consumption measurement reference information is used to distinguish the network energy consumption measurement reference information itself from other network energy consumption measurement reference information under a same condition.

In this way, the network energy consumption measurement configuration information is identified via the network energy consumption measurement reference information, thereby avoiding conflicts or confusion during reception. In addition, the network energy consumption measurement reference information further includes a receiving gNB ID, so as to facilitate a corresponding base station to receive the gNB ID, thereby avoiding an occurrence of reception conflicts.

In some embodiments, a service type is used to characterize a service type of a network to be measured. Herein, the service type includes at least one of: a dynamic adaptive streaming over http (DASH) type, a multimedia telephony service over IMS (Multimedia Telephony Service for IMS, MTSI) type, a virtual reality (VR) type, an augmented reality (AR) type, an extended reality (XR) type, a data service type, a voice service type, an internet of things service type, a real-time communication service type, or a location service type.

In this way, different service types are distinguished through carrying the service type in the network energy consumption measurement configuration information, thereby enabling measurement of energy consumption of a network to be measured under different service types, and improving an accuracy of energy consumption measurement.

In some embodiments, an area range is used to characterize an area range of a network to be measured. Herein, the area range includes at least one of: cell based (Cell based), timing advance based (TA based), tracking area identity based (TAI based), public land mobile network area based (PLMN area based), a user plane location area (UPLA), a user plane service area (UPSA), or a preset marked area range.

Herein, the preset marked area range may be marked through methods such as longitude/latitude coordinates, a geographical area identifier, a map coordinate, etc. Exemplarily, the preset marked area range may be a circular, an elliptical, a polygonal, etc. marked area range. The preset marked area range may be described through a shape type and a shape description.

Exemplarily, the shape type may be indicated through four bits, where the shape type includes an ellipsoid point, an ellipsoid point with uncertainty circle, an ellipse with uncertainty elliptical point, a polygon, an ellipsoid point with altitude, an ellipsoid with altitude and uncertainty ellipsoid point, an elliptical arc, a high-precision ellipsoid point with uncertainty ellipse, a high-precision ellipsoid point with altitude and uncertainty ellipsoid, a high-precision ellipsoid point with scalable uncertainty ellipse, and a high-precision ellipsoid point with altitude and scalable uncertainty ellipsoid. The shape description may be described through longitude and latitude.

In this way, the area range of the network to be measured is characterized through carrying the area range in the network energy consumption measurement configuration information, thereby enabling energy consumption measurement for different area ranges, and improving the accuracy of energy consumption measurement.

In some embodiments, slice information in a network to be measured may be identified through the identifier of the network slice carried in the network energy consumption measurement configuration information. Herein, the identifier of the network slice may be a single network slice selection assistance information (S-NSSAI) parameter or the identifier of the network slice may be a network slice assistance information group ID (NSAG ID).

In some embodiments, the identifier of the PDU session (PDU session ID) is a digital identifier for identifying a PDU session in a network to be measured. For example, the PDU session ID (INTEGER (0 to 255)) indicates that a range of identifiers of PDU sessions is integers from 0 to 255, inclusive.

In some embodiments, the identifier of the QoS data flow is used to identify a QoS data flow in a network to be measured. For example, a QoS flow identifier (INTEGER (0 to 63)) indicates that a range of identifiers of QoS data flows is integers from 0 to 63, inclusive.

In some embodiments, the network identifier of the SNPN may be a network identifier (NID), where the NID is used to identify an SNPN in a network to be measured. Herein, the NID is completely independent of the PLMN ID.

In some embodiments, the identifier of the public land mobile network may be a content access gateway identifier (CAG ID), where the CAG ID is used to identify network access permissions of a public network user and a private network user in a network to be measured. Herein, the CAG ID is a special access identifier possessed by a public network integrated non-public network (PNI-NPN) device.

In some embodiments, the identifier of the core network area is used to identify a core network area in a network to be measured. For example, the identifier of the core network area may be a number, a letter, a symbol, or a specific code.

In some embodiments, the priority of energy consumption measurement is used to characterize a priority of the network energy consumption measurement configuration information or an energy saving level. For example, the higher a priority of energy consumption measurement, the higher an energy saving requirement for a network to be measured, and the higher the priority of energy consumption measurement, the higher a subsequent transmission priority of the network energy consumption measurement report.

In this way, a network with a higher energy saving level may be measured preferentially through carrying the priority of energy consumption measurement in the network energy consumption measurement configuration information, so as to obtain a network energy consumption measurement report of a corresponding network in time, and to configure and manage the energy consumption of the network in time.

In some embodiments, the energy consumption threshold for energy consumption measurement is used to characterize a setting upper limit for an energy consumption amount per unit time, a specific time period, or a specific space of a terminal or a base station within a certain granularity. For example, energy consumed per unit time is measured in watts, and energy consumed in a specific time period or a specific space is measured in kilowatt-hours.

In some embodiments, the address of the target functional entity is used to characterize an address of a target functional entity that receives a network energy consumption measurement report. Herein, the address of the target functional entity may be an internet protocol (IP) address of the target functional entity.

In some embodiments, the measurement interval for energy consumption measurement is used to characterize a measurement interval upon the base station performs energy consumption measurement on a network to be measured. For example, if the measurement interval for energy consumption measurement is 5 minutes, it means that the base station performs energy consumption measurement on the network to be measured every 5 minutes and generates a corresponding network energy consumption measurement report.

In some embodiments, the measurement type for energy consumption measurement is used to characterize a type of a current energy consumption measurement and a type of the network energy consumption measurement report. Herein, the measurement type for energy consumption measurement includes at least one of: an energy consumption type, an energy efficiency type, a renewable energy type, or a carbon emission type. For example, in a case where the measurement type for energy consumption measurement includes an energy consumption type, the base station measures energy consumption of a network to be measured upon performing energy consumption measurement on the network to be measured, and generates a network energy consumption measurement report related to the energy consumption.

In some embodiments, the sending period of the network energy consumption measurement report is used not only to indicate a sending period of the network energy consumption measurement report but also to indicate a measurement period for energy consumption measurement.

Exemplarily, the sending period of the network energy consumption measurement report is configured via a higher-layer entity.

In this way, an energy consumption detection is performed on a network to be measured periodically, and a corresponding network energy consumption measurement report is uploaded periodically through carrying the sending period of the network energy consumption measurement report in the network energy consumption measurement configuration information, which facilitates regular monitoring of network energy consumption and analysis of a long-term energy consumption trend.

In some embodiments, the sending trigger indication of the network energy consumption measurement report is used to characterize a trigger event for sending the network energy consumption measurement report. Herein, the sending trigger indication of the network energy consumption measurement report includes at least one of: an energy consumption threshold, an energy efficiency threshold, a renewable energy utilization threshold, or a carbon emission threshold.

Exemplarily, during an energy consumption measurement process, in a case where a measured value related to energy consumption reaches the energy consumption threshold, a corresponding network energy consumption measurement report is uploaded.

In this way, an energy consumption status of a network may be monitored in a timely manner through carrying the sending trigger indication of the network energy consumption measurement report in the network energy consumption measurement configuration information. In a case where the energy consumption status of the network reaches a setting threshold, sending of the network energy consumption measurement report is triggered, thereby timely discovering a network with abnormal energy consumption, ensuring a timely monitoring of the network, so as to achieve an effect of reducing network energy consumption.

In some embodiments, the real-time sending indication of the network energy consumption measurement report is used to indicate that the base station directly sends a generated network energy consumption measurement report after completing a measurement within the measurement interval for energy consumption measurement.

In this way, the base station directly sends the network energy consumption measurement report after energy consumption measurement through carrying the real-time sending indication of the network energy consumption measurement report in the network energy consumption measurement configuration information, so as to facilitate checking of the energy consumption status of the network in a timely manner, thereby improving the real-time performance of energy consumption monitoring.

In some embodiments, the periodic sending indication of the network energy consumption measurement report is used to indicate that the base station sends the network energy consumption measurement report based on a sending period of the network energy consumption measurement report. For example, after generating the network energy consumption measurement report, the base station stores the generated network energy consumption measurement report locally, and after reaching the sending period of the network energy consumption measurement report, the locally stored network energy consumption measurement reports will be sent in batches.

In this way, multiple network energy consumption measurement reports are sent in batches according to the sending period, through carrying the periodic sending indication of the network energy consumption measurement report in the network energy consumption measurement configuration information, which is conducive to data integration and analysis. The energy consumption status, a changing trend, etc. of the network can be better understood through integrating and analyzing multiple network energy consumption measurement reports. In addition, a network load of sending of network energy consumption measurement reports can be effectively reduced, thereby improving a stability and reliability of sending.

In some embodiments, the start indication for energy consumption measurement is used to indicate that the base station starts or resumes energy consumption measurement.

In some embodiments, the measurement time for energy consumption measurement is used to indicate time-related information for energy consumption measurement. Herein, the measurement time for energy consumption measurement includes at least one of: a start timestamp for energy consumption measurement, a stop timestamp for energy consumption measurement, a duration of energy consumption measurement, or validity time for energy consumption measurement.

In this way, a time range for energy consumption measurement may be determined, and an energy consumption status of a network in different time periods may be understood through carrying the measurement time for energy consumption measurement in the network energy consumption measurement configuration information, so as to analyze the energy consumption status of the network more accurately, thereby formulating a corresponding energy saving measure.

In some embodiments, the pause indication for energy consumption measurement is used to indicate that the base station stops performing energy consumption measurement or the base station releases corresponding network energy consumption measurement configuration information.

In some embodiments, the network energy consumption measurement configuration information further includes configuration information of a slice. The configuration information of the slice includes configuration user information of the slice. The base station may perform energy consumption measurement on a configuration user of one or more slices in a network to be measured based on the configuration information of the slice carried in the network energy consumption measurement configuration information.

In this way, energy consumption measurement can be performed on a user in the network to be measured through carrying the configuration information of the slice in the network energy consumption measurement configuration information, enabling flexible selection of a user service, a PDU session, and a QoS flow for energy consumption measurement, thereby achieving energy consumption measurement at a slice level and a user level, helping to adjust resource allocation and network optimization at the slice level and the user level, so as to achieve an effect of energy saving.

In S102: a network energy consumption measurement report is generated based on the network energy consumption measurement configuration information.

As an implementation, the base station performs energy consumption measurement on a network to be measured based on the network energy consumption measurement configuration information, and generates a network energy consumption measurement report. In some embodiments, the start time for energy consumption measurement is any of:
time upon the network energy consumption measurement configuration information is obtained;
time upon a measurement indication for energy consumption measurement carried in the network energy consumption measurement configuration information is obtained; or
time corresponding to a start timestamp for energy consumption measurement carried in the network energy consumption measurement configuration information.

Exemplarily, the base station performs energy consumption measurement directly upon receiving the network energy consumption measurement configuration information. Alternatively, the base station performs energy consumption measurement directly upon receiving the measurement indication for energy consumption measurement carried in the network energy consumption measurement configuration information. Alternatively, the base station starts performing energy consumption measurement, in a case where current time is the time corresponding to the start timestamp for energy consumption measurement carried in the network energy consumption measurement configuration information.

In some embodiments, the base station selects a terminal to perform energy consumption measurement based on the network energy consumption measurement configuration information.

Exemplarily, the base station determines a cell requiring energy consumption measurement based on information such as a cell, a cell set, a tracking area identity, etc., in the area range carried in the network energy consumption measurement configuration information, and then selects a terminal in the cell requiring energy consumption measurement to perform energy consumption measurement.

In this way, precise measurement may be achieved through the area range carried in the network energy consumption measurement configuration information, which can effectively control a measurement range and an optimization range, and an accuracy of energy consumption measurement can be improved through selecting a terminal in the cell to perform energy consumption measurement.

In some embodiments, the base station stops performing energy consumption measurement in a case where a preset condition is satisfied.

Herein, the preset condition includes any of:
receiving a pause indication for energy consumption measurement carried in the network energy consumption measurement configuration information;
current time is time corresponding to a stop timestamp for energy consumption measurement carried in the network energy consumption measurement configuration information;
a duration of energy consumption measurement reaches a duration of energy consumption measurement carried in the network energy consumption measurement configuration information; or
a duration of energy consumption measurement reaches validity time for energy consumption measurement carried in the network energy consumption measurement configuration information.

The duration of energy consumption measurement is a length of time the base station performs energy consumption measurement, and the validity time for energy consumption measurement is a validity period during which the base station performs energy consumption measurement. Relevant data obtained by the base station performing energy consumption measurement within the validity time is valid data, while data measured outside the validity time may be considered as expired data or invalid data.

In some embodiments, the base station obtains release indication information to stop performing energy consumption measurement.

Herein, the release indication information is used to indicate that the base station releases the network energy consumption measurement configuration information, where the release indication information includes the network energy consumption measurement reference information.

Exemplarily, when the target functional entity considers that the network energy consumption measurement configuration information does not conform to a current energy consumption measurement status or does not wish the base station to continue performing energy consumption measurement based on the network energy consumption measurement configuration information, the target functional entity directly sends the release indication information to the base station or the target functional entity sends the release indication information to the base station via the AMF network element, so that the base station stops performing energy consumption measurement and releases the corresponding network energy consumption measurement configuration information. Herein, the release indication information includes the network energy consumption measurement reference information to be released.

In this way, when it is not necessary for the base station to perform energy consumption measurement, the base station is timely stopped from performing energy consumption measurement through sending the release indication information, which can reduce the energy consumption of the base station and reduce a storage pressure on the base station.

In some embodiments, the network energy consumption measurement report includes at least one of: network energy consumption measurement reference information, a service type of a measured network, an area range of a measured network, a network slice in a measured network, an identifier of a PDU session in a measured network, a QoS data flow in a measured network, a network identifier of an SNPN in a measured network, an identifier of a measured public land mobile network, an identifier of a measured core network area, measurement time for energy consumption measurement, a terminal identification identifier of the network energy consumption measurement report, energy consumption information, or energy efficiency information.

For a detailed description of the network energy consumption measurement reference information to the measurement time for energy consumption measurement, reference may be made to the relevant description above, and the present disclosure will not be repeated herein, only other information of the network energy consumption measurement report will be described below.

Herein, the identifier of the network energy consumption measurement report is used to identify the network energy consumption measurement report, so as to distinguish different network energy consumption measurement reports.

The identifier of the network energy consumption measurement report is used for the terminal to identify the network energy consumption measurement report corresponding or associated with the terminal itself. The terminal identification identifier of the network energy consumption measurement report is more detailed compared with the identifier of the network energy consumption measurement report.

The energy consumption information is used to represent information related to energy consumption in energy consumption measurement. Herein, the energy consumption information includes at least one of: a total energy consumption, an electrical energy consumption, a thermal energy consumption, a fuel consumption, a green energy consumption, a carbon intensity, a carbon emission, or renewable energy information, where the renewable energy information is used to characterize renewable non-fossil energy.

Exemplarily, the total energy consumption is generally expressed in metric units, such as kilowatt-hours (kW/h) or joules. The electrical energy consumption is generally expressed in kilowatt-hours. The thermal energy consumption is used to represent heatrelated energy consumption, generally expressed in heat units, such as kilocalories (kcal) or joules. The fuel consumption is used to represent energy consumption generated by using fossil fuels or other energy sources, generally expressed in heat units, such as kilocalories or joules. The green energy consumption is used to represent energy consumption generated by using renewable energy sources (e.g., solar energy, wind energy, water energy, etc.), generally expressed in watt-hours (W/h) or kilowatt-hours. The carbon intensity is used to represent a relationship between energy usage and carbon dioxide, generally expressed as a carbon dioxide emission generated per unit of energy, for example, a carbon dioxide emission per kilowatt-hour. A calculation method of the carbon intensity is to first convert energy consumption amount into standard coal, and then calculate a carbon dioxide emission per unit of standard coal. A calculation formula of the carbon intensity is: carbon intensity = carbon emission/standard coal consumption * 1000000, where the carbon emission may be measured directly or calculated through parameters such as an energy consumption amount and a factor, and the standard coal consumption may be calculated through parameters such as an energy consumption amount and an energy conversion to standard coal coefficient. The carbon emission is used to represent an amount of carbon dioxide emitted per watt-hour or kilowatt-hour, and the calculation method of the carbon emission may be a formula: carbon emission = emission factor * emission amount, where the emission factor represents an amount of a carbon dioxide emission generated per unit of fuel or energy. The renewable energy information is used to characterize renewable non-fossil energy, such as wind energy, solar energy, thermal energy, geothermal energy, hydrothermal energy, marine energy, hydroelectric power, biomass, landfill gas, sewage treatment plant gas, biogas, etc., generally expressed in watt-hours or kilowatt-hours.

Energy efficiency information is an important indicator for evaluating energy consumption performance, representing a wireless performance or a throughput obtained per unit of energy consumption. Herein, the energy efficiency information includes at least one of: an energy consumption efficiency, an energy efficiency, or a renewable energy efficiency.

Exemplarily, the energy consumption efficiency is generally expressed in units such as bits per joule (bit/j) or bits per watt-hour (bit/Wh). The energy efficiency is generally expressed as a percentage, and a calculation method of the energy efficiency is a ratio of an effective energy output to a total input energy. For example, upon measuring a service in a terminal, a calculation method is to take a ratio percentage of an energy consumption of the service to an energy consumption of the terminal as an energy efficiency of the service. For another example, in a case where measuring an energy consumption efficiency of one or more slices in a cell, a ratio percentage of an energy consumption of the one or more slices to a total energy consumption of the cell, or a ratio percentage of an energy consumption of the one or more slices to an energy consumption of all slices of the cell is taken as the energy efficiency of the one or more slices. The renewable energy efficiency is used to characterize a ratio percentage of a consumed renewable energy to a total energy consumption. For example, a ratio percentage of a renewable energy consumed by a certain terminal to a total energy consumption. For another example, in a case where measuring a renewable energy efficiency of one or more slices in a cell, a ratio percentage of a renewable energy consumed by the one or more slices to a total energy consumption of the cell, or a ratio percentage of a renewable energy consumed by the one or more slices to an energy consumption of all slices of the cell is taken as the renewable energy efficiency of the one or more slices.

In some embodiments, the base station determines a sending requirement of the network energy consumption measurement report corresponding to the network energy consumption measurement configuration information based on a configuration manner of the network energy consumption measurement configuration information.

Herein, the sending requirement of the network energy consumption measurement report is used to characterize an urgency with which a higher-layer entity obtains the network energy consumption measurement report.

Exemplarily, for a network energy consumption measurement report corresponding to network energy consumption measurement configuration information configured by a target functional entity with a determined measurement object, a timeliness requirement is relatively high, due to a fact that an object of energy consumption measurement mainly targets a certain terminal, a certain slice, etc. Energy consumption optimization may be directly performed on the terminal, slice, etc. through obtaining a corresponding network energy consumption measurement report in a timely manner. For a network energy consumption measurement report corresponding to network energy consumption measurement configuration information configured by a target functional entity without a determined measurement object, a timeliness requirement is relatively low, due to a fact that an object of energy consumption measurement is some terminals, some services, or some slices in a specific area, a workload of energy consumption measurement is large, and a range is relatively wide.

In S103: the network energy consumption measurement report is sent.

In some embodiments, the base station sends the network energy consumption measurement report based on the network energy consumption measurement configuration information.

Exemplarily, for network energy consumption measurement configuration information in different configuration manners, network energy consumption measurement reports sent from the base station are different based on the network energy consumption measurement configuration information. For example, in a case where a higher-layer entity configures the network energy consumption measurement configuration information via a target functional entity, the base station sends a network energy consumption measurement report, including at least one of:
the base station sends the network energy consumption measurement report based on a sending period of the network energy consumption measurement report carried in the network energy consumption measurement configuration information;
the base station sends the network energy consumption measurement report based on a sending trigger indication of the network energy consumption measurement report carried in the network energy consumption measurement configuration information;
the base station sends the network energy consumption measurement report based on a real-time sending indication of the network energy consumption measurement report carried in the network energy consumption measurement configuration information or a default real-time sending indication of the network energy consumption measurement report of the network energy consumption measurement configuration information; or
the base station sends the network energy consumption measurement report based on a periodic sending indication of the network energy consumption measurement report carried in the network energy consumption measurement configuration information.

As another example, in a case where a target functional entity directly configures the network energy consumption measurement configuration information, the base station sends a network energy consumption measurement report, including at least one of:
the base station sends the network energy consumption measurement report based on a real-time sending indication of the network energy consumption measurement report carried in the network energy consumption measurement configuration information;
the base station sends the network energy consumption measurement report based on a sending period of the network energy consumption measurement report carried in the network energy consumption measurement configuration information; or
the base station sends the network energy consumption measurement report based on a periodic sending indication of the network energy consumption measurement report carried in the network energy consumption measurement configuration information.

In some embodiments, as shown in FIG. 5, a base station sends a network energy consumption measurement report to a target functional entity.

In other embodiments, as shown in FIG. 6, a base station sends a network energy consumption measurement report to an AMF network element, and then the AMF sends the network energy consumption measurement report to a target functional entity.

In some embodiments, the base station adjusts a network configuration to reduce an energy consumption.

Herein, the network configuration includes at least one of: a transmission configuration of periodic and semi-persistent signals, a switching of dynamic cells, a data receiving mode of a terminal, an energy saving mode configuration of a terminal, a transmit power of the base station, a spectrum allocation configuration, a spectrum sharing configuration, a division of dynamic cells, a beamforming configuration, a network slice configuration, a transmission configuration of a common channel, a scheduling configuration of a spectrum resource, an allocation configuration of a time-domain resource, a power control configuration, a signal transmission configuration, a resource block scheduling configuration, or a QoS scheduling configuration.

Exemplarily, the base station may reduce or adjust a sending of periodic and semi-persistent signals. For example, the periodic and semi-persistent signals include at least one of: a channel state information reference signal (CSI-RS), a group common/terminal-specific physical downlink control channel (PDCCH), a semi-persistent scheduling physical downlink shared channel (SPS PDSCH), a physical uplink control channel (PUCCH) carrying a scheduling request (SR), a physical uplink shared channel (PUSCH) or a PUCCH carrying a CSI report, a PUCCH carrying a hybrid automatic repeat request-acknowledgment (HARQ-ACK) for user semi-persistent scheduling, a positioning reference signal (PRS), or a reference signal (RS) for positioning.

As another example, the base station may adjust the switching of dynamic cells. For example, adjusting a switching of semi-static/dynamic cell in one or more granularities (subframe/slot/symbol). Herein, the switching of dynamic cells includes at least one of: an activation request switching of an information element/network node of a terminal, or a switching operation of a network node (Transmission and Receiving Point (TRP)/repeater) within a cell (used to indicate a signal augmentation switching of a duration of a semi-static and/or a dynamic cell/subframe/slot/symbol).

As another example, the base station may adjust the data receiving mode of a terminal. For example, the base station adjusts a data receiving mode of a terminal group or a terminal in a specific cell to enable the terminal to implement connected discontinuous reception (C-DRX).

As another example, the base station may adjust the energy saving mode configuration of a terminal. For example, the base station adjusts a mechanism of an energy saving mode or a sleep mode of the terminal, and a related mechanism for switching a battery state of the terminal.

As another example, the base station may adjust the transmit power of the base station in real time according to a network energy consumption measurement report and a network load. For example, reducing the transmit power under a low load, and increasing the transmit power under a high load to ensure a quality of service of the base station.

As another example, the base station may dynamically adjust the spectrum allocation configuration according to the network energy consumption measurement report and a spectrum utilization rate, so as to allocate a spectrum resource reasonably, thereby ensuring an efficient utilization of a spectrum and reducing an energy consumption.

As another example, the base station may adjust the spectrum sharing configuration to achieve spectrum sharing with other operators, reducing redundant spectrum usage, thereby improving an overall utilization rate of a spectrum and reducing an energy consumption.

As another example, the base station may adjust the division of dynamic cells according to the network energy consumption measurement report and a user distribution. For example, increasing a cell density in high user density areas to reduce energy consumption, and reducing a cell density in low user density areas to improve energy efficiency, and turning off a cell with a low user access to reduce an energy consumption.

As another example, the base station may adjust the beamforming configuration according to a user distribution and a communication requirement, and then adjust an antenna radiation pattern, so as to improve a signal quality, reduce an ineffective radiation, and reduce an energy consumption.

As another example, the base station may adjust the network slice configuration according to the network energy consumption measurement report and requirements of different services, so that each slice may be optimized independently, thereby improving a resource utilization rate, and reducing an energy consumption. Alternatively, the base station may perform slice switching through an equivalent slice to improve a resource utilization rate and an efficiency, and reduce an energy consumption.

As another example, the base station may adjust the transmission configuration of a common channel. For example, the base station may reduce a signal or the base station may not transmit a signal, the base station may increase a signal transmission period, the base station may enable an on-demand transmission mode of a common channel, the base station may offload a common channel to other carriers, or the base station may use a light version or a relaxed version of a common channel.

As another example, the base station may adjust the scheduling configuration of a spectrum resource. For example, the base station dynamically allocates a spectrum resource (a subcarrier and a bandwidth) through dynamic spectrum sharing (DSS) according to the network energy consumption measurement report and a requirement, so as to improve a utilization rate of the spectrum resource.

As another example, the base station may adjust the allocation configuration of a time-domain resource. For example, the base station dynamically allocates a time-domain resource according to the network energy consumption measurement report and a transmission requirement of the terminal, and the base station may adjust a size and a position of a time slot, so as to improve a network efficiency and reduce an energy consumption.

As another example, the base station may adjust the power control configuration. For example, the base station dynamically adjusts a power according to the network energy consumption measurement report and a location, a channel quality, etc. of the terminal, so as to reduce interference and improve an energy efficiency. The base station may also adopt a minimum power transmission according to the network energy consumption measurement report under a premise of ensuring communication quality, so as to reduce an energy consumption during transmission.

As another example, the base station may adjust the signal transmission configuration. For example, the base station uses beamforming technology to directionally transmit a signal, thereby improving a transmission power, reducing an interference, and reducing an energy consumption.

As another example, the base station may adjust the resource block scheduling configuration. For example, the base station adjusts a bandwidth according to the network energy consumption measurement report and a requirement of the terminal, so as to improve a scheduling flexibility and reduce an energy consumption.

As another example, the base station may adjust the QoS scheduling configuration. For example, the base station adjusts a QoS resource allocation in advance according to the network energy consumption measurement report and a QoS predictive scheduling, so as to ensure a quality of service in a future time period, thereby improving a network efficiency, and avoiding an occurrence of excessive high energy consumption in some cells.

In this way, the base station can reasonably adjust various resources of a network through the network energy consumption measurement report, so as to reduce a network energy consumption, improve a network energy efficiency, and ensure a good network performance.

In some embodiments, the base station may pre-configure a radio resource through analyzing the network energy consumption measurement report, and directly perform configuration and scheduling based on the pre-configured radio resource in a case where relevant information in the network energy consumption measurement report reaches a trigger condition or a relevant threshold, so as to achieve automatic reduction of network energy consumption and improve an energy consumption optimization efficiency.

In some embodiments, a centralized unit (gNB-CU) and a distributed unit (gNB-DU) in the base station may be in a separated state. In the above state, the base station obtains network energy consumption measurement configuration information, including at least one of:
the centralized unit obtains the network energy consumption measurement configuration information from the distributed unit;
the centralized unit obtains the network energy consumption measurement configuration information from a target functional entity;
the distributed unit obtains the network energy consumption measurement configuration information from the centralized unit; or
the distributed unit obtains the network energy consumption measurement configuration information from a target functional entity.

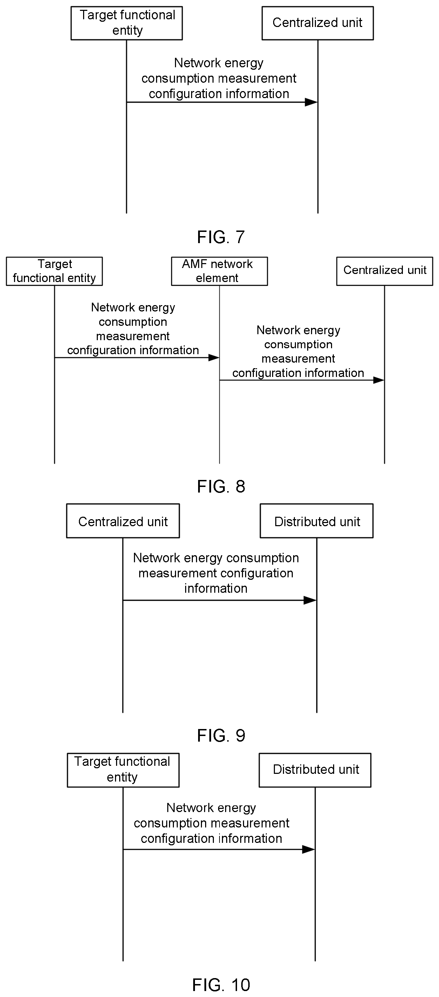

Exemplarily, as shown in FIG. 7, a centralized unit receives network energy consumption measurement configuration information sent from a target functional entity. Alternatively, as shown in FIG. 8, a centralized unit receives network energy consumption measurement configuration information sent from a target functional entity via an AMF network element. Furthermore, as shown in FIG. 9, a distributed unit receives network energy consumption measurement configuration information sent from a centralized unit.

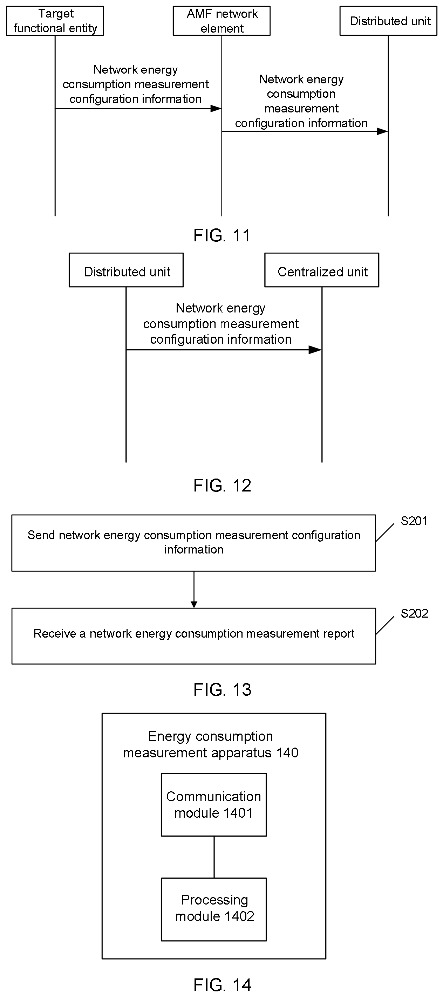

As another example, as shown in FIG. 10, a distributed unit receives network energy consumption measurement configuration information directly sent from a target functional entity. Alternatively, as shown in FIG. 11, a distributed unit receives network energy consumption measurement configuration information sent from a target functional entity via an AMF network element. Furthermore, as shown in FIG. 12, a centralized unit receives network energy consumption measurement configuration information sent from a distributed unit.

It should be noted that, in a process of the target functional entity sending the network energy consumption measurement configuration information to the centralized unit, or the AMF network element sending the network energy consumption measurement configuration information to the centralized unit, the network energy consumption measurement configuration information is transmitted via a dedicated signaling based on a configuration manner of the network energy consumption measurement configuration information. For example, in a case where a higher-layer entity configures the network energy consumption measurement configuration information via a target functional entity, a terminal-related signaling is used to transmit the network energy consumption measurement configuration information. In a case where a target functional entity directly configures the network energy consumption measurement configuration information, a non-terminal-related signaling is used to transmit the network energy consumption measurement configuration information.

Herein, the dedicated signaling includes the network energy consumption measurement configuration information, where the network energy consumption measurement configuration information clearly indicates an object or a granularity of energy consumption measurement.

Furthermore, the centralized unit and the distributed unit may directly start performing energy consumption measurement after receiving the network energy consumption measurement configuration information, or the centralized unit and the distributed unit may start performing energy consumption measurement after receiving a start indication for energy consumption measurement carried in the network energy consumption measurement configuration information, or the centralized unit and the distributed unit may start performing energy consumption measurement according to a start timestamp for energy consumption measurement carried in the network energy consumption measurement configuration information.

Correspondingly, upon transmitting the network energy consumption measurement configuration information, similarly, the network energy consumption measurement configuration information is also transmitted via a dedicated signaling. For example, in a case where a higher-layer entity configures the network energy consumption measurement configuration information via the target functional entity, a terminal-related signaling is used to transmit the network energy consumption measurement configuration information. In a case where a target functional entity directly configures the network energy consumption measurement configuration information, a non-terminal-related signaling is used to transmit the network energy consumption measurement configuration information.

Herein, the dedicated signaling includes the network energy consumption measurement configuration information, where the network energy consumption measurement configuration information clearly indicates an object or a granularity of energy consumption measurement.

Exemplarily, the dedicated signaling may include at least one of: a GNB-DU CONFIGURATION UPDATE ACKNOWLEDGE signaling, an F1 SETUP RESPONSE signaling, a GNB-CU CONFIGURATION UPDATE signaling, a GNB-DU RESOURCE COORDINATION RESPONSE signaling, a UE CONTEXT SETUP REQUEST signaling, a SYSTEM INFORMATION DELIVERY COMMAND, or a CU-DU RADIO INFORMATION TRANSFER signaling.

In some embodiments, in a case where a target functional entity needs to stop the base station from performing energy consumption measurement based on the network energy consumption measurement configuration information, the target functional entity sends deactivation information to a distributed unit or a centralized unit, so that the base station stops performing energy consumption measurement.

Exemplarily, the centralized unit sends the deactivation information to the distributed unit via a dedicated signaling after receiving the deactivation information. Upon receiving the deactivation information, the centralized unit and the distributed unit stop performing energy consumption measurement and release the network energy consumption measurement configuration information.

Herein, the deactivation information includes the network energy consumption measurement configuration information, and the dedicated signaling includes the deactivation information. Exemplarily, the dedicated signaling may include at least one of: a UE CONTEXT RELEASE COMMAND, a GNB-DU CONFIGURATION UPDATE ACKNOWLEDGE signaling, an F1 SETUP RESPONSE signaling, a GNB-CU CONFIGURATION UPDATE signaling, a GNB-DU RESOURCE COORDINATION RESPONSE signaling, a UE CONTEXT SETUP REQUEST signaling, a SYSTEM INFORMATION DELIVERY COMMAND, or a CU-DU RADIO INFORMATION TRANSFER signaling.

In some embodiments, a centralized unit (gNB-CU) and a distributed unit (gNB-DU) in the base station may be in a separated state. In the above state, the base station sends a network energy consumption measurement report, including at least one of:
the centralized unit sends the network energy consumption measurement report to a target functional entity;
the centralized unit sends the network energy consumption measurement report to the distributed unit;
the distributed unit sends the network energy consumption measurement report to the centralized unit; or
the distributed unit sends the network energy consumption measurement report to a target functional entity.

Exemplarily, in a case where the centralized unit obtains the network energy consumption measurement configuration information from the target functional entity, the distributed unit obtains the network energy consumption measurement configuration information from the centralized unit. Correspondingly, upon sending the network energy consumption measurement report, the distributed unit sends the network energy consumption measurement report to the centralized unit via a dedicated signaling, or the distributed unit sends the network energy consumption measurement report to the centralized unit via existing information, and then the centralized unit uniformly sends a network energy consumption measurement report corresponding to the distributed unit and a network energy consumption measurement report corresponding to the centralized unit to the target functional entity.

As another example, in a case where the distributed unit obtains the network energy consumption measurement configuration information from the target functional entity, the centralized unit obtains the network energy consumption measurement configuration information from the distributed unit. Correspondingly, upon sending the network energy consumption measurement report, the centralized unit sends the network energy consumption measurement report to the distributed unit via a dedicated signaling or the centralized unit sends the network energy consumption measurement report to the distributed unit via existing information, and then the distributed unit uniformly sends the network energy consumption measurement report corresponding to the centralized unit and a network energy consumption measurement report corresponding to the distributed unit to the target functional entity.

Herein, the dedicated signaling may include at least one of: a REFERENCE TIME INFORMATION REPORT signaling, a GNB-DU CONFIGURATION UPDATE ACKNOWLEDGE, a UE CONTEXT SETUP REQUEST, a UE CONTEXT RELEASE REQUEST signaling, a UE CONTEXT MODIFICATION REQUIRED signaling, a UE INACTIVITY NOTIFICATION signaling, a NOTIFY signaling, an INITIAL UL RRC MESSAGE TRANSFER signaling, a UL RRC MESSAGE TRANSFER signaling, or an RRC CONTAINER DELIVERY REPORT signaling.

As another example, the distributed unit and the centralized unit may directly send their respective network energy consumption measurement reports to the target functional entity.

Exemplarily, the target functional entity includes any of: an energy saving entity, an energy consumption measurement entity, an operation administration and maintenance (OAM) network element, or an authentication management function (AMF) network element.

In this way, the base station can implement energy consumption measurement on the network based on the network energy consumption measurement configuration information, and generate a network energy consumption measurement report based on an energy consumption measurement result, facilitating monitoring and management of network energy consumption, thereby achieving an effect of energy saving.

FIG. 13 shows a schematic flowchart of an energy consumption measurement method provided by the present disclosure. As shown in FIG. 13, the energy consumption measurement method is applied to a target functional entity, and the method at least includes S201 to S202.

In S201: network energy consumption measurement configuration information is sent.

Herein, the network energy consumption measurement configuration information includes at least one of: network energy consumption measurement reference information, a service type, an area range, an identifier of a network slice, an identifier of a protocol data unit (PDU) session, an identifier of a quality of service (QoS) data flow, a network identifier of a standalone non-public network (SNPN), an identifier of a public land mobile network, an identifier of a core network area, a priority of energy consumption measurement, an energy consumption threshold for energy consumption measurement, an address of a target functional entity, a measurement interval for energy consumption measurement, a measurement type for energy consumption measurement, a sending period of a network energy consumption measurement report, a sending trigger indication of a network energy consumption measurement report, a real-time sending indication of a network energy consumption measurement report, a periodic sending indication of a network energy consumption measurement report, a start indication for energy consumption measurement, measurement time for energy consumption measurement, or a pause indication for energy consumption measurement.

In some embodiments, the network energy consumption measurement reference information includes at least one of: a mobile country code (MCC), a mobile network code (MNC), a tracking area code (TAC), a public land mobile network identifier (PLMN ID), an identifier of a base station (gNB ID), a location area code (LAC), or an identifier (ID) of the network energy consumption measurement reference information.

In some embodiments, the service type includes at least one of: a dynamic adaptive streaming over http (DASH) type, a multimedia telephony service over IMS (MTSI) type, a virtual reality (VR) type, an augmented reality (AR) type, an extended reality (XR) type, a data service type, a voice service type, an internet of things service type, a real-time communication service type, or a location service type.

In some embodiments, the area range includes at least one of: cell based (Cell based), timing advance based (TA based), tracking area identity based (TAI based), public land mobile network area based (PLMN area based), a user plane location area (UPLA), a user plane service area (UPSA), or a preset marked area range.

In some embodiments, the measurement type for energy consumption measurement includes at least one of: an energy consumption type, an energy efficiency type, a renewable energy type, or a carbon emission type.

In some embodiments, the sending trigger indication of the network energy consumption measurement report includes at least one of: an energy consumption threshold, an energy efficiency threshold, a renewable energy utilization threshold, or a carbon emission threshold.

In some embodiments, the measurement time for energy consumption measurement includes at least one of: a start timestamp for energy consumption measurement, a stop timestamp for energy consumption measurement, a duration of energy consumption measurement, or validity time for energy consumption measurement.

In some embodiments, the start time for energy consumption measurement is any of:
time upon the base station obtains the network energy consumption measurement configuration information;
time upon the base station obtains a measurement indication for energy consumption measurement carried in the network energy consumption measurement configuration information; or
time corresponding to a start timestamp for energy consumption measurement carried in the network energy consumption measurement configuration information.

In some embodiments, the base station stops performing energy consumption measurement in a case where a preset condition is satisfied. Herein, the preset condition includes any of:
the base station receives a pause indication for energy consumption measurement carried in the network energy consumption measurement configuration information;
current time is time corresponding to a stop timestamp for energy consumption measurement carried in the network energy consumption measurement configuration information;
a duration of energy consumption measurement reaches a duration of energy consumption measurement carried in the network energy consumption measurement configuration information; or
a duration of energy consumption measurement reaches validity time for energy consumption measurement carried in the network energy consumption measurement configuration information.

In some embodiments, the above method further includes that: the target functional entity sends release indication information to the base station.

Herein, the release indication information is used to indicate that the base station releases the network energy consumption measurement configuration information, where the release indication information includes the network energy consumption measurement reference information.

In some embodiments, the target functional entity sends the network energy consumption measurement configuration information to the base station via an AMF network element.

In S202: a network energy consumption measurement report is received.

Herein, the network energy consumption measurement report is generated, by the base station, based on the network energy consumption measurement configuration information. Where the network energy consumption measurement report includes at least one of: network energy consumption measurement reference information, a service type of a measured network, an area range of a measured network, a network slice in a measured network, an identifier of a PDU session in a measured network, a QoS data flow in a measured network, a network identifier of an SNPN in a measured network, an identifier of a measured public land mobile network, an identifier of a measured core network area, measurement time for energy consumption measurement, an identifier of a network energy consumption measurement report, a terminal identification identifier of a network energy consumption measurement report, energy consumption information, or energy efficiency information.

For a detailed description of the network energy consumption measurement reference information to the measurement time for energy consumption measurement, reference may be made to the relevant description above, and the present disclosure will not be repeated herein, only other information of the network energy consumption measurement report will be described below.

In some embodiments, the identifier of the network energy consumption measurement report is used to identify the network energy consumption measurement report, so as to distinguish different network energy consumption measurement reports.

In some embodiments, the terminal identification identifier of the network energy consumption measurement report is used for the terminal to identify the network energy consumption measurement report corresponding or associated with the terminal itself. The terminal identification identifier of the network energy consumption measurement report is more detailed compared with the identifier of the network energy consumption measurement report.

In some embodiments, the energy consumption information is used to represent information related to energy consumption in energy consumption measurement. The energy consumption information includes at least one of: a total energy consumption, an electrical energy consumption, a thermal energy consumption, a fuel consumption, a green energy consumption, a carbon intensity, a carbon emission, or renewable energy information, where the renewable energy information is used to characterize renewable non-fossil energy.

In some embodiments, the energy efficiency information includes at least one of: an energy consumption efficiency, an energy efficiency, or a renewable energy efficiency.

In this way, the target functional entity sends the network energy consumption measurement configuration information to the base station, so that the base station performs energy consumption measurement based on the network energy consumption measurement configuration information, and generates a network energy consumption measurement report based on an energy consumption measurement result, facilitating monitoring and management of network energy consumption, thereby achieving an effect of energy saving.

It can be understood that, in order to implement the above functions, the energy consumption measurement apparatus includes corresponding hardware structures and/or software modules for performing each function. Those skilled in the art will easily realize that, in combination with the algorithm steps of the examples described in the embodiments of the present disclosure, the present disclosure can be implemented in hardware or a combination of hardware and computer software. Whether a function is performed by hardware or computer software driving hardware depends on a specific application and design constraint conditions of the technical solution. Professional technicians may use different methods for each specific application to implement the described functions, however, such implementation should not be considered beyond the scope of the present disclosure.

The embodiments of the present disclosure may divide the energy consumption measurement apparatus into functional modules according to the above method embodiments. For example, each functional module may be divided corresponding to each function, or two or more functions may be integrated into a functional module. The above integrated module may be implemented in a form of hardware or in a form of software. It should be noted that the division of modules in the embodiments of the present disclosure is schematic and is merely a logical function division, and there may be another division manner in actual implementation. The following description takes an example in which the division of each functional module corresponding to each function.

FIG. 14 is a schematic diagram of a structure of an energy consumption measurement apparatus, applied to a base station, provided by the embodiments of the present disclosure. The energy consumption measurement apparatus 140 may execute the energy consumption measurement method provided by the above method embodiments. As shown in FIG. 14, the energy consumption measurement apparatus 140 includes a communication module 1401 and a processing module 1402.

The communication module 1401 is configured to obtain energy consumption measurement configuration information.

The processing module 1402 is configured to generate a network energy consumption measurement report based on the network energy consumption measurement configuration information.

The communication module 1401 is further configured to send the network energy consumption measurement report.

In some embodiments, the network energy consumption measurement configuration information includes at least one of: network energy consumption measurement reference information, a service type, an area range, an identifier of a network slice, an identifier of a protocol data unit (PDU) session, an identifier of a quality of service (QoS) data flow, a network identifier of a standalone non-public network (SNPN), an identifier of a public land mobile network, an identifier of a core network area, a priority of energy consumption measurement, an energy consumption threshold for energy consumption measurement, an address of a target functional entity, a measurement interval for energy consumption measurement, a measurement type for energy consumption measurement, a sending period of a network energy consumption measurement report, a sending trigger indication of a network energy consumption measurement report, a real-time sending indication of a network energy consumption measurement report, a periodic sending indication of a network energy consumption measurement report, a start indication for energy consumption measurement, measurement time for energy consumption measurement, or a pause indication for energy consumption measurement.

In some embodiments, the network energy consumption measurement reference information includes at least one of: a mobile country code (MCC), a mobile network code (MNC), a tracking area code (TAC), a public land mobile network identifier (PLMN ID), an identifier of a base station (gNB ID), a location area code (LAC), or an identifier (ID) of the network energy consumption measurement reference information.

In some embodiments, the service type includes at least one of: a dynamic adaptive streaming over http (DASH) type, a multimedia telephony service over IMS (MTSI) type, a virtual reality (VR) type, an augmented reality (AR) type, an extended reality (XR) type, a data service type, a voice service type, an internet of things service type, a real-time communication service type, or a location service type.

In some embodiments, the area range includes at least one of: cell based (Cell based), timing advance based (TA based), tracking area identity based (TAI based), public land mobile network area based (PLMN area based), a user plane location area (UPLA), a user plane service area (UPSA), or a preset marked area range.

In some embodiments, the measurement type for energy consumption measurement includes at least one of: an energy consumption type, an energy efficiency type, a renewable energy type, or a carbon emission type.

In some embodiments, the sending trigger indication of the network energy consumption measurement report includes at least one of: an energy consumption threshold, an energy efficiency threshold, a renewable energy utilization threshold, or a carbon emission threshold.

In some embodiments, the measurement time for energy consumption measurement includes at least one of: a start timestamp for energy consumption measurement, a stop timestamp for energy consumption measurement, a duration of energy consumption measurement, or validity time for energy consumption measurement.

In some embodiments, the start time for energy consumption measurement is any of: time upon the network energy consumption measurement configuration information is obtained; time upon a measurement indication for energy consumption measurement carried in the network energy consumption measurement configuration information is obtained; or time corresponding to a start timestamp for energy consumption measurement carried in the network energy consumption measurement configuration information.

In some embodiments, the processing module 1402 is further configured to stop performing energy consumption measurement in a case where a preset condition is satisfied. Herein, the preset condition includes any of: receiving a pause indication for energy consumption measurement carried in the network energy consumption measurement configuration information; current time is time corresponding to a stop timestamp for energy consumption measurement carried in the network energy consumption measurement configuration information; a duration of energy consumption measurement reaches a duration of energy consumption measurement carried in the network energy consumption measurement configuration information; or a duration of energy consumption measurement reaches validity time for energy consumption measurement carried in the network energy consumption measurement configuration information.

In some embodiments, the communication module 1401 is further configured to obtain release indication information, where the release indication information is used to indicate that the base station releases the network energy consumption measurement configuration information, and the release indication information includes the network energy consumption measurement reference information.

In some embodiments, the network energy consumption measurement report includes at least one of: network energy consumption measurement reference information, a service type of a measured network, an area range of a measured network, a network slice in a measured network, an identifier of a PDU session in a measured network, a QoS data flow in a measured network, a network identifier of an SNPN in a measured network, an identifier of a measured public land mobile network, an identifier of a measured core network area, measurement time for energy consumption measurement, an identifier of the network energy consumption measurement report, a terminal identification identifier of the network energy consumption measurement report, energy consumption information, or energy efficiency information.

In some embodiments, the energy consumption information includes at least one of: a total energy consumption, an electrical energy consumption, a thermal energy consumption, a fuel consumption, a green energy consumption, a carbon intensity, a carbon emission, or renewable energy information, where the renewable energy information is used to characterize renewable non-fossil energy.

In some embodiments, the energy efficiency information includes at least one of: an energy consumption efficiency, an energy efficiency, or a renewable energy efficiency.

In some embodiments, the processing module 1402 is further configured to adjust network configuration to reduce energy consumption. Herein, the network configuration includes at least one of: a transmission configuration of periodic and semi-persistent signals, a switching of dynamic cells, a data receiving mode of a terminal, an energy saving mode configuration of a terminal, a transmit power of the base station, a spectrum allocation configuration, a spectrum sharing configuration, a division of dynamic cells, a beamforming configuration, a network slice configuration, a transmission configuration of a common channel, a scheduling configuration of a spectrum resource, an allocation configuration of a time-domain resource, a power control configuration, a signal transmission configuration, a resource block scheduling configuration, or a QoS scheduling configuration.

In some embodiments, the communication module 1401 is configured to receive the network energy consumption measurement configuration information sent from a target functional entity.

In some embodiments, the communication module 1401 is configured to receive the network energy consumption measurement configuration information sent from the target functional entity via an AMF network element.

In some embodiments, the base station includes a centralized unit and a distributed unit, and the communication module 1401 is configured for at least one of: obtaining the network energy consumption measurement configuration information from the distributed unit; obtaining the network energy consumption measurement configuration information from a target functional entity; obtaining the network energy consumption measurement configuration information from the centralized unit; or obtaining the network energy consumption measurement configuration information from a target functional entity.

In some embodiments, the base station includes a centralized unit and a distributed unit, and the communication module 1401 is configured for at least one of: sending the network energy consumption measurement report to a target functional entity; sending the network energy consumption measurement report to the distributed unit; sending the network energy consumption measurement report to the centralized unit; or sending the network energy consumption measurement report to a target functional entity.

In some embodiments, the target functional entity includes any of: an energy saving entity, an energy consumption measurement entity, an operation administration and maintenance (OAM) network element, or an authentication management function (AMF) network element.

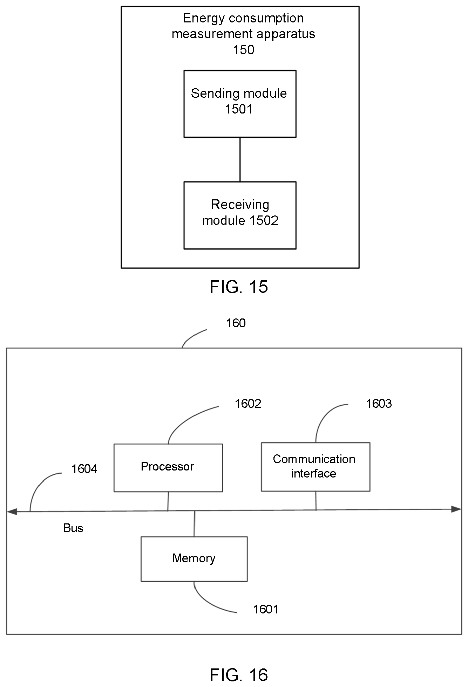

FIG. 15 is a schematic diagram of a structure of an energy consumption measurement apparatus, applied to a target functional entity, provided by the embodiments of the present disclosure. The energy consumption measurement apparatus 150 may execute the energy consumption measurement method provided by the above method embodiments. As shown in FIG. 15, the energy consumption measurement apparatus 150 includes a sending module 1501 and a receiving module 1502.

The sending module 1501 is configured to send network energy consumption measurement configuration information.

The receiving module 1502 is configured to receive a network energy consumption measurement report, where the network energy consumption measurement report is generated, by a base station, based on the network energy consumption measurement configuration information.

In some embodiments, the network energy consumption measurement configuration information includes at least one of: network energy consumption measurement reference information, a service type, an area range, an identifier of a network slice, an identifier of a protocol data unit (PDU) session, an identifier of a quality of service (QoS) data flow, a network identifier of a standalone non-public network (SNPN), an identifier of a public land mobile network, an identifier of a core network area, a priority of energy consumption measurement, an energy consumption threshold for energy consumption measurement, an address of a target functional entity, a measurement interval for energy consumption measurement, a measurement type for energy consumption measurement, a sending period of a network energy consumption measurement report, a sending trigger indication of a network energy consumption measurement report, a real-time sending indication of a network energy consumption measurement report, a periodic sending indication of a network energy consumption measurement report, a start indication for energy consumption measurement, measurement time for energy consumption measurement, or a pause indication for energy consumption measurement.

In some embodiments, the network energy consumption measurement report includes at least one of: network energy consumption measurement reference information, a service type of a measured network, an area range of a measured network, a network slice in a measured network, an identifier of a PDU session in a measured network, a QoS data flow in a measured network, a network identifier of an SNPN in a measured network, an identifier of a measured public land mobile network, an identifier of a measured core network area, measurement time for energy consumption measurement, an identifier of a network energy consumption measurement report, a terminal identification identifier of a network energy consumption measurement report, energy consumption information, or energy efficiency information.

In a case where the functions of the above integrated modules are implemented in the form of hardware, the embodiments of the present disclosure provides another structure of the energy consumption measurement apparatus involved in the above embodiments. As shown in FIG. 16, the energy consumption measurement apparatus 160 includes: a processor 1602 and a bus 1604. In some embodiments, the energy consumption measurement apparatus 160 may further include a memory 1601. In some embodiments, the energy consumption measurement apparatus 160 may further include a communication interface 1603.

The processor 1602 may be configured to be a device that implements or executes various exemplary logic blocks, modules, and circuits described in conjunction with the embodiments of the present disclosure. The processor 1602 may be a central processing unit, a general-purpose processor, a digital signal processor, an applicationspecific integrated circuit, a field programmable gate array, or other programmable logic devices, a transistor logic device, a hardware component, or any combination thereof. The processor may implement or execute various exemplary logic blocks, modules, and circuits described in conjunction with the embodiments of the present disclosure. The processor 1602 may also be a combination that implements computing functions, for example, including a combination of one or more microprocessors, a combination of a digital signal processor (DSP) and a microprocessor, etc.

The communication interface 1603 is used to connect with other devices via a communication network. The communication network may be Ethernet, a wireless access network, a wireless local area network (WLAN), etc.

The memory 1601 may be a read-only memory (ROM) or another type of static storage device that may store static information and instructions, a random access memory (RAM) or another type of dynamic storage device that may store information and instructions, or an electrically erasable programmable read-only memory (EEPROM), a magnetic disk storage medium or another magnetic storage device, or any other medium that can be used to carry or store desired program codes in a form of instructions or data structures and that can be accessed by a computer, but is not limited thereto.

As an implementation, the memory 1601 may exist independently of the processor 1602, and the memory 1601 may be connected to the processor 1602 via the bus 1604 for storing instructions or program codes. The processor 1602 revokes and executes the instructions or program codes stored in the memory 1601 to implement the energy consumption measurement method provided by the embodiments of the present disclosure.

In another implementation, the memory 1601 may also be integrated with the processor 1602.

The bus 1604 may be an extended industry standard architecture (EISA) bus or the like. The buses 1604 may be classified into an address bus, a data bus, a control bus, etc. For ease of representation, only one thick line is used in FIG. 16, however, it does not mean that there is only one bus or one type of bus.

Some embodiments of the present disclosure provide a computer-readable storage medium (e.g., a non-transitory computer-readable storage medium). The computer-readable storage medium is stored with computer program instructions. The computer program instructions, upon being run on a computer, enable the computer to execute the energy consumption measurement method according to any of the above embodiments.

Exemplarily, the above computer-readable storage medium may include, but is not limited to, magnetic storage devices (e.g., hard disks, floppy disks, or magnetic tapes, etc.), optical disks (e.g., Compact Disk (CD), Digital Versatile Disk (DVD), etc.), smart cards, and flash memory devices (e.g., Erasable Programmable Read-Only Memory (EPROM), cards, sticks, or key drives, etc.). The various computer-readable storage media described in the present disclosure may represent one or more devices and/or other machine-readable storage media for storing information. The term "machine-readable storage medium" may include, but is not limited to, a wireless channel and various other media capable of storing, containing and/or carrying instructions and/or data.

The embodiments of the present disclosure provide a computer program product containing instructions. The computer program product, upon being run on a computer, enable the computer is to execute the energy consumption measurement method according to any of the above embodiments.

The above description is merely specific embodiments of the present disclosure, however, the protection scope of the present disclosure is not limited thereto. Any changes or substitutions within the technical scope disclosed in the present disclosure should be covered by the protection scope of the present disclosure. Therefore, the protection scope of the present disclosure should be subject to the protection scope of the claims.

## Claims

1. An energy consumption measurement method, wherein the method is applied to a base station and comprises:
obtaining network energy consumption measurement configuration information;
generating a network energy consumption measurement report based on the network energy consumption measurement configuration information; and
sending the network energy consumption measurement report.

2. The method according to claim 1, wherein the network energy consumption measurement configuration information includes at least one of: network energy consumption measurement reference information, a service type, an area range, an identifier of a network slice, an identifier of a protocol data unit (PDU) session, an identifier of a quality of service (QoS) data flow, a network identifier of a standalone non-public network (SNPN), an identifier of a public land mobile network, an identifier of a core network area, a priority of energy consumption measurement, an energy consumption threshold for energy consumption measurement, an address of a target functional entity, a measurement interval for energy consumption measurement, a measurement type for energy consumption measurement, a sending period of the network energy consumption measurement report, a sending trigger indication of the network energy consumption measurement report, a real-time sending indication of the network energy consumption measurement report, a periodic sending indication of the network energy consumption measurement report, a start indication for energy consumption measurement, measurement time for energy consumption measurement, or a pause indication for energy consumption measurement.

3. The method according to claim 2, wherein the network energy consumption measurement reference information includes at least one of: a mobile country code (MCC), a mobile network code (MNC), a tracking area code (TAC), a public land mobile network identifier (PLMN ID), an identifier of the base station (gNB ID), a location area code (LAC), or an identifier (ID) of the network energy consumption measurement reference information.

4. The method according to claim 2, wherein the service type includes at least one of: a dynamic adaptive streaming over http (DASH) type, a multimedia telephony service over IMS (MTSI) type, a virtual reality (VR) type, an augmented reality (AR) type, an extended reality (XR) type, a data service type, a voice service type, an internet of things service type, a real-time communication service type, or a location service type.

5. The method according to claim 2, wherein the area range includes at least one of: cell based (Cell based), timing advance based (TA based), tracking area identity based (TAI based), public land mobile network area based (PLMN area based), a user plane location area (UPLA), a user plane service area (UPSA), or a preset marked area range.

6. The method according to claim 2, wherein the measurement type for energy consumption measurement includes at least one of: an energy consumption type, an energy efficiency type, a renewable energy type, or a carbon emission type.

7. The method according to claim 2, wherein the sending trigger indication of the network energy consumption measurement report includes at least one of: an energy consumption threshold, an energy efficiency threshold, a renewable energy utilization threshold, or a carbon emission threshold.

8. The method according to claim 2, wherein the measurement time for energy consumption measurement includes at least one of: a start timestamp for energy consumption measurement, a stop timestamp for energy consumption measurement, a duration of energy consumption measurement, or validity time for energy consumption measurement.

9. The method according to claim 2, wherein the start time for energy consumption measurement is any of:
time upon the network energy consumption measurement configuration information is obtained;
time upon a measurement indication for energy consumption measurement carried in the network energy consumption measurement configuration information is obtained; or
time corresponding to a start timestamp for energy consumption measurement carried in the network energy consumption measurement configuration information.

10. The method according to claim 2, further comprising:
stopping performing energy consumption measurement in response to a preset condition being satisfied; wherein the preset condition includes any of:
receiving the pause indication for energy consumption measurement carried in the network energy consumption measurement configuration information;
current time being time corresponding to a stop timestamp for energy consumption measurement carried in the network energy consumption measurement configuration information;
a duration of energy consumption measurement reaching a duration of energy consumption measurement carried in the network energy consumption measurement configuration information; or
a duration of energy consumption measurement reaching validity time for energy consumption measurement carried in the network energy consumption measurement configuration information.

11. The method according to claim 1, further comprising:
obtaining release indication information, wherein the release indication information is used to indicate that the base station releases the network energy consumption measurement configuration information, and the release indication information includes the network energy consumption measurement reference information.

12. The method according to claim 1, wherein the network energy consumption measurement report includes at least one of: network energy consumption measurement reference information, a service type of a measured network, an area range of a measured network, a network slice in a measured network, an identifier of a PDU session in a measured network, a QoS data flow in a measured network, a network identifier of an SNPN in a measured network, an identifier of a measured public land mobile network, an identifier of a measured core network area, measurement time for energy consumption measurement, an identifier of the network energy consumption measurement report, a terminal identification identifier of the network energy consumption measurement report, energy consumption information, or energy efficiency information.

13. The method according to claim 12, wherein the energy consumption information includes at least one of: a total energy consumption, an electrical energy consumption, a thermal energy consumption, a fuel consumption, a green energy consumption, a carbon intensity, a carbon emission, or renewable energy information, wherein the renewable energy information is used to characterize renewable non-fossil energy.

14. The method according to claim 12, wherein the energy efficiency information includes at least one of: an energy consumption efficiency, an energy efficiency, or a renewable energy efficiency.

15. The method according to claim 1, further comprising:
adjusting network configuration to reduce energy consumption; wherein the network configuration includes at least one of: a transmission configuration of periodic and semi-persistent signals, a switching of dynamic cells, a data receiving mode of a terminal, an energy saving mode configuration of a terminal, a transmit power of the base station, a spectrum allocation configuration, a spectrum sharing configuration, a division of dynamic cells, a beamforming configuration, a network slice configuration, a transmission configuration of a common channel, a scheduling configuration of a spectrum resource, an allocation configuration of a time-domain resource, a power control configuration, a signal transmission configuration, a resource block scheduling configuration, or a QoS scheduling configuration.

16. The method according to claim 1, wherein the obtaining the network energy consumption measurement configuration information comprises:
receiving network energy consumption measurement configuration information sent from a target functional entity.

17. The method according to claim 16, wherein the receiving the network energy consumption measurement configuration information sent from the target functional entity comprises:
receiving the network energy consumption measurement configuration information sent from the target functional entity via an AMF network element.

18. The method according to claim 1, wherein the base station includes a centralized unit and a distributed unit; and the obtaining the network energy consumption measurement configuration information comprises at least one of:
obtaining, by the centralized unit, the network energy consumption measurement configuration information from the distributed unit;
obtaining, by the centralized unit, the network energy consumption measurement configuration information from a target functional entity;
obtaining, by the distributed unit, the network energy consumption measurement configuration information from the centralized unit; or
obtaining, by the distributed unit, the network energy consumption measurement configuration information from a target functional entity.

19. The method according to claim 1, wherein the base station includes a centralized unit and a distributed unit; and the sending the network energy consumption measurement report comprises at least one of:
sending, by the centralized unit, the network energy consumption measurement report to a target functional entity;
sending, by the centralized unit, the network energy consumption measurement report to the distributed unit;
sending, by the distributed unit, the network energy consumption measurement report to the centralized unit; or
sending, by the distributed unit, the network energy consumption measurement report to a target functional entity.

20. The method according to any one of claims 16 to 19, wherein the target functional entity includes any of: an energy saving entity, an energy consumption measurement entity, an operation administration and maintenance (OAM) network element, or an authentication management function (AMF) network element.

21. An energy consumption measurement method, wherein the method is applied to a target functional entity and comprises:
sending network energy consumption measurement configuration information; and
receiving a network energy consumption measurement report, wherein the network energy consumption measurement report is generated, by a base station, based on the network energy consumption measurement configuration information.

22. The method according to claim 21, wherein the network energy consumption measurement configuration information includes at least one of: network energy consumption measurement reference information, a service type, an area range, an identifier of a network slice, an identifier of a protocol data unit (PDU) session, an identifier of a quality of service (QoS) data flow, a network identifier of a standalone non-public network (SNPN), an identifier of a public land mobile network, an identifier of a core network area, a priority of energy consumption measurement, an energy consumption threshold for energy consumption measurement, an address of a target functional entity, a measurement interval for energy consumption measurement, a measurement type for energy consumption measurement, a sending period of the network energy consumption measurement report, a sending trigger indication of the network energy consumption measurement report, a real-time sending indication of the network energy consumption measurement report, a periodic sending indication of the network energy consumption measurement report, a start indication for energy consumption measurement, measurement time for energy consumption measurement, or a pause indication for energy consumption measurement.

23. The method according to claim 22, wherein the network energy consumption measurement report includes at least one of: the network energy consumption measurement reference information, a service type of a measured network, an area range of a measured network, a network slice in a measured network, an identifier of a PDU session in a measured network, a QoS data flow in a measured network, a network identifier of an SNPN in a measured network, an identifier of a measured public land mobile network, an identifier of a measured core network area, the measurement time for energy consumption measurement, an identifier of the network energy consumption measurement report, a terminal identification identifier of the network energy consumption measurement report, energy consumption information, or energy efficiency information.

24. An energy consumption measurement apparatus, comprising a processor, wherein a computer program, upon being executed, enable the processor to implement the energy consumption measurement method according to any one of claims 1 to 20, or to implement the energy consumption measurement method according to any one of claims 21 to 23.

25. A computer-readable storage medium, wherein the computer-readable storage medium comprises computer instructions; wherein the computer instructions, upon being executed, implement the energy consumption measurement method according to any one of claims 1 to 20, or implement the energy consumption measurement method according to any one of claims 21 to 23.
